Europäisches Patentamt

European Patent Office

Office européen des brevets

(19)

(11) Numéro de publication : **0 104 990**
**B1**

(12) FASCICULE DE BREVET EUROPÉEN

(45) Date de publication du fascicule du brevet :
11.12.85

(51) Int. Cl.⁴ : **B 60 G 21/04**

(21) Numéro de dépôt : 83401813.7

(22) Date de dépôt : 16.09.83

(54) Dispositif de maintien transversal d'une barre anti-dévers.

(30) Priorité : 23.09.82 FR 8216041

(43) Date de publication de la demande :
04.04.84 Bulletin 84/14

(45) Mention de la délivrance du brevet :
11.12.85 Bulletin 85/50

(84) Etats contractants désignés :
DE GB IT

(56) Documents cités :
DE-U- 8 012 412
FR-A- 2 486 461
US-A- 2 043 542
US-A- 2 728 569
US-A- 3 175 842
US-A- 3 342 505

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Vilain, Claude**
**26 Rue du Wurtemberg**
**F-25200 Montbeliard (FR)**
**Inventeur: Gapp, Noël**
**5 bis, rue des Fougères**
**F-90400 Dorans (FR)**

(74) Mandataire : **Moncheny, Michel et al**
**c/o Cabinet Lavoix 2 Place d'Estienne d'Orves**
**F-75441 Paris Cedex 09 (FR)**

EP 0 104 990 B1

Jouve, 18, rue St-Denis, 75001 Paris, France

## Description

L'invention est relative aux dispositifs de maintien transversal de barre anti-dévers pour trains de roues de véhicule automobile, dont la suspension comprend une barre de torsion anti-dévers comportant, d'une part, une partie centrale disposée transversalement au véhicule et supportée dans deux paliers et, d'autre part, deux parties extrêmes orientées obliquement vers l'avant ou vers l'arrière dans un plan à peu près horizontal et respectivement reliées chacune à un élément de suspension mobile verticalement avec l'une des deux roues.

Dans de nombreux cas, ladite partie extrême oblique de la barre participe au maintien longitudinal et transversal du support de la roue correspondante, en particulier quand ce support est une jambe télescopique dont l'extrémité inférieure est articulée sur un levier horizontal, constituant ledit élément de suspension mobile verticalement ; la barre est alors soumise non seulement aux habituelles contraintes de torsion, mais aussi à de notables efforts longitudinaux et transversaux.

Les efforts longitudinaux sont transmis aux paliers susmentionnés, et les efforts transversaux tendent à provoquer des coulissements de la barre dans ces paliers.

Pour empêcher ces coulissements qui entraîneraient de légers déplacements intempestifs des supports de roue et par suite, une imprécision dans le comportement de roulage du véhicule, des moyens de maintien transversal de la barre sont avantageusement prévus. Ces moyens comportent habituellement des pièces de butée solidaires de la barre et en appui axial contre l'un ou chacun des paliers. Mais la barre étant mobile en rotation, cet appui axial s'accompagne d'un frottement générateur de bruit et d'usure des pièces en contact, usure qui provoque à la longue un jeu axial autorisant les susdits coulissements de la barre et déplacements intempestifs des supports de roues.

L'invention a pour but de réaliser, avec des moyens simples, un dispositif de maintien transversal de barre anti-dévers, qui ne présente pas les inconvénients ci-dessus, c'est-à-dire qui ne soit ni bruyant ni sujet à usure.

L'invention concerne un dispositif de maintien d'une barre de torsion transversale anti-dévers portée par deux paliers fixés sur la structure d'un véhicule, caractérisé en ce qu'il comporte au moins un tirant orienté à peu près transversalement au véhicule, déformable élastiquement en torsion, dont une première extrémité est ancrée sur la barre, et dont la seconde extrémité est fixée sur ladite structure.

L'invention concerne également un train de roues du type précité et comportant ce dispositif de maintien.

Selon d'autres caractéristiques avantageuses :
le tirant est une tige en métal élastique ;
le tirant est ancré sur la partie centrale de la barre, entre les deux paliers ;
la première extrémité du tirant est rectiligne, et serrée contre la barre au moyen d'une vis traversant la portion centrale d'un collier en U, dont chaque branche est ajourée d'une lumière traversée par la barre et par le tirant ;
le tirant étant une tige, sa seconde extrémité forme une boucle traversée par une vis la serrant contre la structure du véhicule.

Un exemple de réalisation d'un dispositif selon l'invention est décrit ci-après, avec référence aux dessins annexés sur lesquels :
la Figure 1 est une vue frontale simplifiée d'une moitié d'un train de roues de véhicule, l'autre moitié étant symétrique par rapport au plan longitudinal médian du véhicule ;
la Figure 2 est une vue de dessous d'un détail de la Fig. 1 ;
la Figure 3 est une vue de gauche en coupe suivant la ligne III-III de la Fig. 1.

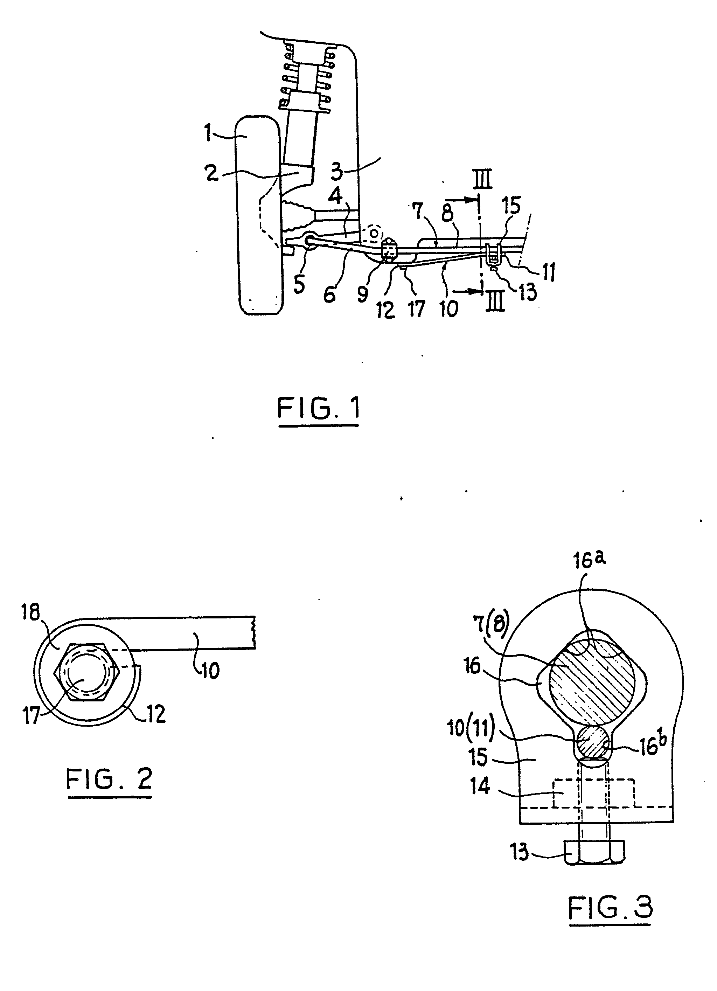

On voit sur la Fig. 1 une roue 1 portée par une jambe télescopique 2, dont la partie inférieure est reliée à la structure 3 d'un véhicule par un levier 4 à peu près horizontal et propre à osciller verticalement. A ce levier est reliée, par une articulation 5, l'une des deux parties extrêmes 6 d'une barre de torsion anti-dévers 7 dont la partie centrale 8 est disposée transversalement par rapport à la direction longitudinale du véhicule et portée à chacune de ses extrémités par un palier 9, fixé sur la structure 3. Chaque partie extrême 6 est orientée obliquement vers l'avant ou vers l'arrière du véhicule tout en étant contenue dans un plan à peu près horizontal, et constitue avec le levier 4 correspondant un triangle oscillant à peu près horizontal.

Une tige transversale 10, réalisée en un métal ayant de bonnes caractéristiques d'élasticité, est ancrée à l'une 11 de ses extrémités sur la partie centrale 8 de la barre, et est fixée à son autre extrémité 12 sur la structure 3. A cet effet, l'extrémité 11 est rectiligne et serrée contre une génératrice de la barre au moyen d'une vis 13, coopérant avec un écrou 14 solidaire de la portion centrale d'un collier 15 en U, dont les branches sont chacune ajourées d'une lumière 16 traversée par la barre 7 et par la tige 10.

L'extrémité 12 (Fig. 2) est enroulée en forme de boucle, et celle-ci est traversée par une vis 17 qui la serre contre la structure 3, avec interposition d'une rondelle 18.

La Fig. 3 montre en détail un exemple de réalisation du collier 15, où chaque lumière 16 présente un contour entourant avec jeu la barre 7 et la tige 10 superposées au-dessus de la vis 13. Ce contour présente une forme de V (en 16$^a$) du côté opposé à la vis 13, de manière à offrir un appui stable à l'une des deux pièces en appui, barre 7 ou tige 10. Dans la disposition représentée, c'est la barre 7 qui porte contre le V de la lumière, la tige 10 étant reçue dans un logement en U 16$^b$, et interposée entre la barre et la vis ; en variante, la barre peut être interposée entre la vis et la tige, celle-ci reposant alors sur le V d'une lumière appropriée.

Lors des débattements verticaux de la roue 1, le triangle formé par le levier 4 et par la partie extrême 6 correspondante oscille verticalement, et la partie centrale 8 de la barre anti-dévers tourne légèrement dans ses paliers 9, entraînant une faible rotation de l'extrémité 11 de la tige 10. L'extrémité 12 de celle-ci étant fixe grâce à la vis 17, la tige se tord et fléchit légèrement sans atteindre sa limite d'élasticité.

Quand la roue 1 et le triangle 4, 6 sont soumis à des efforts longitudinaux et transversaux, la barre 7 tend à coulisser dans les paliers 9, mais en est empêchée par la tige 10 qui est contrainte, selon le sens des efforts, en traction ou en compression suivant la direction transversale du véhicule. La tige se comporte donc comme un tirant transversal qui immobilise axialement la barre 7, assurant ainsi un bon maintien transversal de l'extrémité inférieure de la jambe de suspension 2, et procurant par suite une correcte stabilité de roulage du véhicule. Par ailleurs, cette immobilisation de la barre est obtenue par des moyens peu coûteux qui n'introduisent aucun frottement générateur de bruit ou d'usure.

## Revendications

1. Dispositif de maintien d'une barre de torsion transversale anti-dévers (7) portée par deux paliers (9) fixés sur la structure (3) d'un véhicule, caractérisé en ce qu'il comporte au moins un tirant (10) orienté à peu près transversalement au véhicule, déformable élastiquement en torsion, dont une première extrémité (11) est ancrée sur la barre, et dont la seconde extrémité (12) est fixée sur ladite structure.

2. Dispositif de maintien suivant la revendication 1, caractérisé en ce que le tirant (10) est une tige en métal élastique.

3. Dispositif de maintien suivant l'une quelconque des revendications 1 et 2, caractérisé en ce que le tirant (10) est ancré sur la partie centrale (8) de la barre, entre les deux paliers (9).

4. Dispositif de maintien suivant l'une quelconque des revendications 1 à 3, caractérisé en ce que la première extrémité (11) du tirant est rectiligne et serrée contre la barre (7) au moyen d'une vis (13) traversant la portion centrale d'un collier (15) en U, dont chaque branche est ajourée d'une lumière (16) traversée par la barre et le tirant.

5. Dispositif de maintien suivant la revendication 4, caractérisé en ce que chaque branche du collier comporte une surface d'appui en V (16ª), pour la tige (7) ou le tirant (10).

6. Dispositif de maintien suivant l'une quelconque des revendications 1 à 5, caractérisé en ce que le tirant étant une tige, sa seconde extrémité (12) forme une boucle traversée par une vis (17) la serrant contre la structure du véhicule.

7. Train de roues de véhicule automobile dont la suspension comprend une barre de torsion (7) anti-dévers comportant, d'une part, une partie centrale (8) disposée transversalement au véhicule et supportée dans deux paliers (9) et, d'autre part, deux parties extrêmes (6) orientées obliquement vers l'avant ou vers l'arrière dans un plan à peu près horizontal et respectivement reliées chacune à un élément de suspension (4) mobile verticalement avec l'une des deux roues, caractérisé en ce qu'il comporte un dispositif de maintien suivant l'une quelconque des revendications 1 à 6.

## Claims

1. Device for maintaining a transverse anti-roll torsion bar (7) carried by two bearings (9) secured to the structure (3) of a vehicle, characterized in that it comprises at least one tie (10) which is roughly transversely oriented with respect to vehicle, which is resiliently deformable in torsion, having a first end portion (11) secured to the bar and a second end portion (12) secured to said structure.

2. Device according to claim 1, characterized in that the tie (10) is a rod of resilient metal.

3. Device according to claim 1 or 2, characterized in that the tie (10) is secured to the central portion (8) of the bar between the two bearings (9).

4. Device according to claim 1, 2 or 3, characterized in that the first end portion (11) of the tie is rectilinear and clamped against the bar (7) by a bolt (13) which extends through the central portion of a U-shaped collar (15) having branches which are provided with an aperture (16) through which the bar and the tie extend.

5. Device according to claim 4, characterized in that each branch of the collar has a V-shaped bearing surface (16a) for the rod (7) or the tie (10).

6. Device according to any one of the claims 1 to 5, characterized in that the tie being a rod, its second end portion (12) forms a loop through which extends a bolt (17) which clamps the loop against the structure of the vehicle.

7. Set of wheels of a motor vehicle whose suspension comprises an anti-roll torsion bar (7) having, on one hand, a central portion (8) disposed transversely of the vehicle and supported in two bearings (9) and, on the other hand, two end portions (6) oriented obliquely forwardly or rearwardly in a roughly horizontal plane and respectively connected to a suspension element (4) which is vertically movable with a respective one of the two wheels, characterized in that said set of wheels comprises a maintaining device according to any one of the claims 1 to 6.

## Patentansprüche

1. Vorrichtung zur Fixierung einer transversalen Torsions-Stabilisatorstange (7), die in zwei am Chassis (3) eines Fahrzeuges befestigten Lagern (9) gelagert ist, gekennzeichnet durch mindestens eine elastisch verdrillbare ungefähr transversal zum Fahrzeug orientierte Zugstange (10), deren erstes Ende (11) an der Stange verankert und deren zweites Ende (12) an dem Chassis befestigt ist.

2. Vorrichtung nach Anspruch 1, dadurch gekennzeichnet, daß die Zugstange (10) eine elastische Metallstange ist.

3. Vorrichtung nach Anspruch 1 oder 2, dadurch gekennzeichnet, daß die Zugstange (10) im Mittenbereich (8) der Stabilisatorstange zwischen den zwei Lagern (9) verankert ist.

4. Vorrichtung nach einem der Ansprüche 1 bis 3, dadurch gekennzeichnet, daß das erste Ende der Zugstange gradlinig und mit einer Schraube (13) gegen die Stabilisatorstange (7) gepreßt ist, die den Mittenbereich eines U-förmigen Rings (15) durchquert, dessen jeder Schenkel mit einer Öffnung (16) versehen ist, die von der Stabilisatorstange und der Zugstange durchquert wird.

5. Vorrichtung nach Anspruch 4, dadurch gekennzeichnet, daß jeder Schenkel des Rings eine V-förmige Auflagefläche (16ª) für die Zugstange (10) oder die Stabilisatorstange (7) aufweist.

6. Vorrichtung nach einem der Ansprüche 1 bis 5, dadurch gekennzeichnet, daß die Zugstange (10) eine Stange ist, deren zweites Ende (12) eine Öse bildet, die von einer Schraube (17) durchquert wird, mit der die Zugstange gegen das Chassis des Fahrzeuges angezogen wird.

7. Radaufhängung für Kraftfahrzeuge, deren Suspension eine Torsions-Stabilisatorstange (7) aufweist, mit einerseits einem transversal zum Fahrzeug angeordneten Mittenbereich (8), der in zwei Lagern (9) gelagert ist und andererseits mit zwei in einer etwa horizontalen Ebene schräg nach vorne oder nach hinten orientierten Endbereichen (6), die jeweils mit einem der beiden Räder vertikal beweglichen Aufhängungsteil (4) verbunden sind, gekennzeichnet durch eine Vorrichtung nach einem der Ansprüche 1 bis 6.

FIG. 1

FIG. 2

FIG. 3

1